Europäisches Patentamt

European Patent Office

Office européen des brevets

(19)

(11) Veröffentlichungsnummer: **0 168 611**
**B1**

(12) ## EUROPÄISCHE PATENTSCHRIFT

(45) Veröffentlichungstag der Patentschrift: **14.03.90**

(21) Anmeldenummer: **85106886.6**

(22) Anmeldetag: **04.06.85**

(51) Int. Cl.⁵: **G 01 N 21/35**, G 01 N 21/61

(54) **Fotometer.**

(30) Priorität: **18.07.84 DE 3426472**
**20.12.84 DE 3446436**

(43) Veröffentlichungstag der Anmeldung:
**22.01.86 Patentblatt 86/04**

(45) Bekanntmachung des Hinweises auf die
Patenterteilung:
**14.03.90 Patentblatt 90/11**

(84) Benannte Vertragsstaaten:
**AT BE CH DE FR GB IT LI NL SE**

(56) Entgegenhaltungen:
**DD-A- 219 585**
**DE-B-2 235 970**
**DE-U-6 940 058**
**DE-U-7 816 971**

**JOURNAL OF PHYSICS D. APPLIED PHYSICS,**
**Band, 17, Nr. 2, Februar 1984, Seiten L27-L30,**
**Dorking, GB; I. GUY et al.: "A technique for**
**observing the effects of an electric field on the**
**infrared spectra of materials"**

(73) Patentinhaber: **Hartmann & Braun**
**Aktiengesellschaft**
**Gräfstrasse 97**
**D-6000 Frankfurt am Main 90 (DE)**

(72) Erfinder: **Fabinski, Walter**
**An der Landwehr 70**
**D-6239 Kriftel (DE)**

(56) Entgegenhaltungen:
**Die Akte enthält technische Angaben, die nach
dem Eingang der Anmeldung eingereicht
wurden und die nicht in dieser Patentschrift
enthalten sind.**

Courier Press, Leamington Spa, England.

**Beschreibung**

Die Erfindung bezieht sich auf ein Fotometer zur Gas- oder Flüssigkeitsanalyse gemäß dem Oberbegriff des Anspruches 1 oder des Anspruches 5.

Durch die DE—OS 29 10 188 und die DE—OS 15 98 893 sind Fotometer bekanntgeworden, bei denen die Lichtstrahlen, die die Meßküvette bzw. Vergleichsküvette durchlaufen haben, von einem gasgefüllten Empfänger aufgenommen werden, dessen Querschnitt so groß ist wie der Querschnitt der Küvetten.

Auch sind Fotometer bekannt, bei denen die Lichtstrahlen, die die Meß- bzw. Vergleichsküvette durchlaufen haben, von Feststoffempfängern aufgenommen werden, deren bestrahlte Fläche wesentlich kleiner ist als der Querschnitt der Meß- bzw. Vergleichsküvette. Solche Feststoffempfänger haben den Nachteil, daß sie, sofern nicht weitere optische Vorrichtungen vorgesehen sind, die die Küvetten verlassenden Strahlungen nur zum Teil aufnehmen. Diese optischen Einrichtung können, u.U. recht aufwendig sein, wenn die Strahler relativ großflächig sind, wie dies bei Strahlern für den infraroten Bereich (thermischer Strahler) im allgemeinen zutrifft. Dazu kommt, daß es u.U. nicht gelingt, mit Hilfe der optischen Mittel die gesamte Energie auf den Empfänger zu konzentrieren. Solche Feststoffempfänger haben jedoch im Vergleich zu den gasgefüllten Empfängern den Vorteil der längeren Stabilität, da sie nicht leerlaufen.

Durch die britische Patentschrift 979 850 ist ein Gasanalysator bekanntgeworden, der mit zwei Küvetten ausgestattet ist, die von Infrarotstrahlen durchströmt werden. Die die Küvetten (Meßküvette, Vergleichsküvette) verlassenden Strahlen werden von einem Empfänger aufgenommen, in dem ein teildurchlässiger Spiegel schräg angeordnet ist. Die Arbeitsweise dieses Analysators setzt voraus, daß ein Teil der in den Empfänger eintretenden Infrarotstrahlen den schrägstehenden Spiegel durchsetzt und über ein Filter am Ende des Empfängers auf eine photoelektrische Zelle fällt, während ein anderer Teil der in den Empfänger eintretenden Infrarotstrahlen rechtwinklig reflektiert wird und über ein weiteres Filter auf eine seitlich des Empfängers angeordnete photoelektrische Zelle fällt. Die Filter müssen in einer vorgegebenen Weise dimensioniert werden, damit die Ausgangswerte der photoelektrischen Zellen, in Differenz geschaltet, einen für die Konzentration des Meßgases charakteristischen Wert ergeben können.

Der Erfindung liegt die Aufgabe zugrunde, für ein Fotometer der eingangs genannten Art einen Feststoffempfänger anzugeben, der ohne optische Vorrichtungen unmittelbar hinter die Küvetten angeordnet werden kann und der es gestattet, die gesamte Küvettenöffnung zu überdecken.

Die Aufgabe wird mit den im Kennzeichen des Anspruches 1 oder des Anspruches 5 angegebenen Mitteln gelöst.

Die Folie aus Polyvinylidenfluorid (PVDP) kann, sofern sie rund ist, einen Durchmesser in der Größe von 14 bis 25 mm haben. Ähnlich wie bei einem mit gasgefüllten Empfängern ausgestatteten Fotometer entsteht der Vorteil, daß Mittel zur Fokussierung der Lichtstrahlen nicht erforderlich sind. Bei dem gemäß der Erfindung ausgebildeten Fotometer sind die Vorzüge eines Fotometers mit opto-pneumatischen Detektoren mit den Vorteilen eines mit Feststoffempfängern ausgestatteten Fotometers verbunden.

Nach einer Ausführung der Erfindung kann die Folie in einen gasgefüllten Infrarotstrahlen absorbierenden Empfänger angeordnet sein und bei Strahleneinfall sowohl pyroelektrisch als auch piezoelektrisch wirken, wobei der pyroelektrische Effekt zur Bestimmung des Referenzsignals dient und der piezoelektrische Effekt zur Bestimmung der Meßkomponente dient. Der piezoelektrische Effekt ergibt sich aus dem opto-pneumatischen Effekt der Einrichtung, an der auch der pyroelektrische Effekt entsteht. Die Meß- und Vergleichssignale werden bei dem so ausgebildeten Fotometer durch Ausnutzung der zwei Empfängereigenschaften zeitlich nacheinander in einem Strahlengang gewonnen, wodurch der Einsatz des neuen Fotometers auch in der in-situ-Meßtechnik ermöglicht ist.

Der Empfänger selbst besteht aus einer Kammer, die mit der zu messenden Gaskomponente oder einem Ersatzgas gefüllt ist. Die Kammer ist auf der einen Seite mit einem für Infrarotstrahlen durchlässigen Fenster abgeschlossen so daß die von einer Lichtquelle ausgehenden Infrarotstrahlen in die Kammer eindringen können.

Zwischen der Lichtquelle und der Absorptionsstrecke ist eine Lichtmodulationsvorrichtung vorgesehen, die die Infrarotstrahlen periodisch in einer vorgegebenen Frequenz unterbricht. Außerdem ist in dem Strahlengang vor dem Empfänger eine mit Empfängergas gefüllte Selektivierungsküvette vorgesehen, die periodisch aus dem Strahlengang herausgezogen werden kann. Die Frequenz der Bewegung der Filterküvette ist kleiner als die Unterbrecherfrequenz der Lichtmodulationseinrichtung.

Die die Filterküvette durchlaufenden Lichtstrahlen werden weder in der Absorptionsstrecke absorbiert, noch von dem Gas in dem Empfänger. Diese Lichtstrahlen treffen auf die erfindungsgemäß vorgesehene Einrichtung, auf der sie einen pyroelektrischen Effekt erzeugen, der der Intensität der auftreffenden Strahlen proportional ist. Dieser pyroelektrische Effekt dient als Referenzsignal des Fotometers.

Wird der Lichtstrahl durch die Filterküvette nicht beeinflußt, so fällt auch Strahlung im Bereich der Absorption des Empfängerfüllgases in den Empfänger. Es entsteht im Empfänger eine Umsetzung der absorbierten Strahlungsenergie in Druck, der die Durchbiegung der Einrichtung zur Folge hat, die von der Größe der Vorabsorption in der Absorptionsstrecke abhängig ist und zur Bildung des Meßsignals dient.

Der Empfänger nach der Erfindung ist verwendbar bei einem Fotometer, bei dem die eine Lichtquelle verlassenden Infrarotstrahlen vor dem Eindringen in den Empfänger eine mit Meßgas durchströmte Absorptionsküvette durchlaufen.

Die Erfindung ist anwendbar bei Fotometern, die zur in-situ-Messung eingesetzt werden. Hierbei wird der Strom des zu analysierenden Gases zwischen der Lichtquelle und dem Empfänger vorbeigeführt.

Gemäß der Erfindung ausgebildete Fortometer werden anhand der Zeichnung näher erläutert.

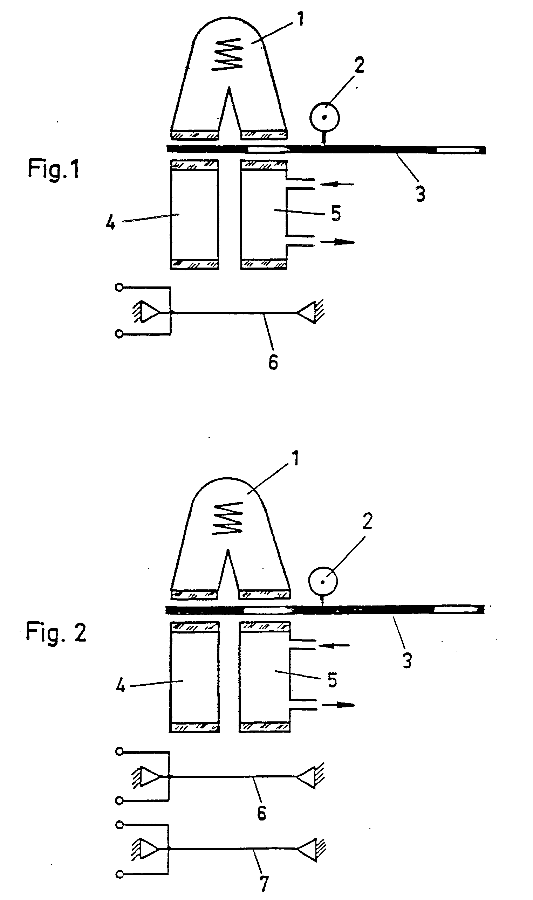

Figur und Figur 2 zeigen Fotometer, die mit einer Meß- und einer Vergleichsküvette ausgebildet sind;

Figur 3 und Figur 4 zeigen Fotometer, die mit nur einem Strahlengang arbeiten;

Figur 5 läß das den Fotometern nach Figur 3 und Figur 4 zugrunde liegende Meßprinzip erkennen.

Figur 1 und Figur 2 lassen Wechsellicht-Fotometer erkennen, bei denen durch die Lichtquelle 1 infrarotes Licht erzeugt wird. Durch den Motor 2 wird ein Blendenrad 3 angetrieben, durch das der Lichtstrah durch die Vergleichsküvette 4 bzw. die Meßküvette 5 gegenphasig unterbrochen wird. Unmittelbar hinter der Küvetten 4 und 5 ist ein Feststoffempfänger 6 angeordnet, der die gesamte Apertur der Meßküvette 5 und der Vergleichsküvette 4 einnimmt. Der Feststoffempfänger 6 besteht aus einer Folie aus Polyvinylidenfluorid (PVDF), die neben pyroelektrischen Eigenschaften auch einen Piezoeffekt aufweist. Bezüglich des thermischen Effektes wird die Folie durch Schwärzung optimiert. Die Folie hat eine Dicke von 6 bis 10 µm. Anstelle einer Folie aus PVDF kann man eine aus einem ähnlichen Polymer mit pyroelektrischen Eigenschaften z.B. aus Polyvinylfluorid oder Polyvinylchlorid hergestellte Folie verwenden.

Im Vergleich zu herkömmlichen mit Feststoffempfängern ausgestatteten Fotometern ist bei dem erfindungsgemäß ausgebildeten Fotometer die Strahlungsweglänge, die nicht vom Meßgas beströmt wird, sehr kurz. Eine solche längere Weglänge könnte zu einer fehlerhaften Messung führen, wenn die Atmosphäre Meßgas enthält, z.B. $CO_2$ oder $H_2O$.

Falls das Fotometer Erschütterungen ausgesetzt ist, wird zusätzlich zu der Folie 6 eine zweite Folie 7 angeordnet, der die Folie 6 elektrisch entgegengeschaltet ist (Figur 2).

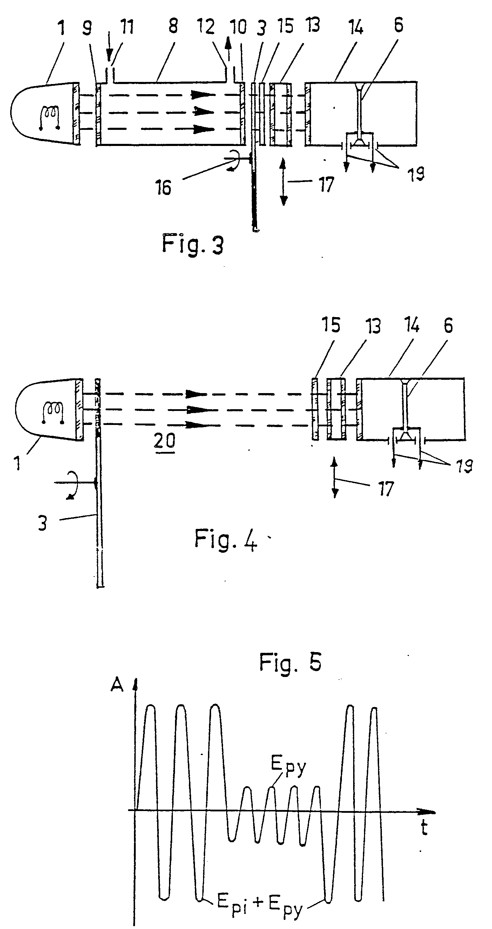

Figur 3 zeigt ein Fotometer, bei dem die Infrarotstrahlen einer Lichtquelle 1 in eine Absorptionsküvette 8 eintreten, die mit den für Infrarotstrahlen durchlässigen Fenstern 9 und 10 ausgestattet ist. Die Absorptionsküvette 8 wird von dem zu analysierenden Gas durchströmt, wozu ein Einlaßstutzen 11 und ein Auslaßstutzen 12 vorgesehen sind. Die durch das Fenster 10 die Absorptionsküvette 8 verlassenden Infrarotstrahlen treffen durch das Filter 15 auf die Selektivierungsküvette 13, die die Meßkomponente enthält, und treten dann in den mit Meßgas gefüllten Empfänger 14 ein. Zwischen der Absorptionsküvette 8 und dem Filter 15 ist das Unterbrecherrad 3 angeordnet, das sich um die Achse 16 dreht. Das Unterbrecherrad 3 kann auch unmittelbar vor der Lichtquelle 1, d.h. zwischen Lichtquelle 1 und Absorptionsküvette 8, angeordnet sein.

Die Selektivierungsküvette 13 wird in Richtung des Doppelpfeiles 17 intermittierend in den Strahlengang hineingeschoben und zurückbewegt. In dem Empfänger 14 ist erfindungsgemäß die Polyvinylidenfluorid-Folie 6 angeordnet, die bei Strahleneinfall sowohl pyroelektrisch als auch optopneumatisch wirkt. Die dabei entstehenden Referenzsignale—als Folge des pyroelektrischen Effektes—und piezoelektrische Meßsignale—als Folge des optopneumatischen Effektes—werden an den Kontakten 19 abgenommen.

Die erfindungsgemäß vorgesehene Folie ist beidseitig mit einem dünnen transparenten elektrisch leitenden Material, vorzugsweise Metall, überzogen. Zur Erhöhung des pyroelektrischen Effektes kann die Folie 6 einseitig (auf der der Strahlung zugewandten Seite) geschwärzt sein. Die Kontakte 19 stehen mit diesen Schichten in Verbindung.

Figur 4 zeigt ein Fotometer zur in-situ-Messung. Diese Ausführungsform unterscheidet sich von dem Ausführungsform nach Figur 3 dadurch, daß das Unterbrecherrad 3 unmittelbar vor der Lichtquelle angeordnet ist und daß der zu analysierende Gasstrom 20 sich in dem Raum zwischen Lichtquelle 1 und Filter 15 befindet. Ansonsten sind gleiche Elemente der dargestellten Fotometer mit gleichen Bezugszeichen versehen.

Der Erzeugung des Meßeffektes dient das Unterbrecherrad 3, das den Strahlengang periodisch unterbricht. Als vorteilhaft hat sich eine Unterbrecherfrequenz zwischen 5 und 20 Hz erwiesen.

Figur 5 gibt eine Vorstellung von dem Signal A, das an dem Anschluß 19 der erfindungsgemäß vorgesehenen Einrichtung 6 entsteht. Wenn bei dem Fotometer nach den Figuren 3 und 4 die Selektivierungsküvette 13 sich außerhalb des Strahlenganges befindet, ergibt sich ein durch große Amplituden gekennzeichnetes Signal. In diesem Falle addiert sich, wie in Figur 5 dargestellt, der pyroelektrische Effekt $E_{py}$ zu dem piezoelektrischen Effekt $E_{pl}$.

Wird die Selektivierungsküvette 13 bei den Fotometern nach den Figuren 3 und 4 in Richtung des Doppelpfeiles 17 in den Strahlengang hineingeschoben, dann entsteht an dem Anschluß 19 ein kleines Signal, das in dem Kurvenzug nach Figur 5 durch die Schwingungen kleiner Amplitude angedeutet ist. In diesem Falle ergibt sich an der Folie 6 aus Polyvinylidenfluorid nur der pyroelektrische Effekt $E_{py}$. Der piezoelektrische Effekt wird unterdrückt. In dieser Phase, in der das Referenzsignal gebildet wird, entsteht eine Vorabsorption der Strahlungsanteile in der Selektivierungsküvette 13, die mangels Absorption zu der Erwärmung des Gases in dem Empfänger 14 geführt hätten.

Nacheinander werden die Referenzsignale $E_{py}$ und die Meßsignale $(E_{py}+E_{pl})$ durch die Anschlüsse 19 auf eine Auswerteeinheit gegeben. Dam Umschalten dieser Auswerteeinheit ist mit Hilfe einer mechanischen oder elektrischen Vorrichtung mit der Bewegung der Selektivierungsküvette 13 in Richtung des Doppelpfeiles 17 synchronisiert.

Die Fotometer nach den Figuren 3 und 4 sind zusätzlich mit einem Interferenzfilter 15 ausgestattet. Durch dieses Interferenzfilter 15 wird die Belastung der erfindungsgemäß vorgesehenen Folie 6 durch die auftreffenden Strahlungen in Grenzen gehalten. Außerdem werden Fehler vermieden, die durch absorbierende Begleitgase hervorgerufen werden können.

Der Durchlaufbereich des Interferenzfilters 15 entspricht dem Absorptionsbereich der Meßkomponente.

Die Auswertung der in Figur 5 dargestellten elektrischen Signale kann in einer Rechenschaltung vorgenommen werden. Die Meßgröße $E_A$ kann z.B. gemäß folgender Verknüpfung gewonnen werden:

$$E_A = \frac{(\alpha \cdot E_{pi} + E_{py}) - \beta \cdot E_{py}}{E_{py}}$$

wobei

$\alpha$ der Absorption der Meßkomponente entspricht und

$\beta$ ein Faktor zur Nullpunktseinstellung bedeutet.

**Patentansprüche**

1. Fotometer zur Gas- oder Flüssigkeitsanalyse mit einer Lichtquelle (1) und einer Lichtmodulationseinrichtung (2, 3), mit einer Meß- (5) und einer Vergleichsküvette (4) im Strahlengang dieser Lichtquelle sowie mit einem Detektor im Strahlengang unmittelbar nach der Meß- und Vergleichsküvette mit mindestens einem Feststoffempfänger zur Umwandlung der auftreffenden Strahlung in ein elektrisches Ausgangssignal, dadurch gekennzeichnet, daß als Feststoffempfänger eine Folie (6) aus Polyvinylidenfluorid vorgesehen ist, deren von der Lichtstrahlung beaufschlagte Fläche so groß ist wie die Querschnittsfläche der Küvetten.

2. Fotometer nach Anspruch 1, dadurch gekennzeichnet, daß die Folie (6) zur Erhöhung des thermischen Effektes geschwärzt ist.

3. Fotometer nach Anspruch 1 oder 2, dadurch gekennzeichnet, daß die Folie (6) eine Stärke von 6 bis 10 µm hat.

4. Fotometer nach Anspruch 1, dadurch gekennzeichnet, daß parallel zu der Folie (6) eine zweite Folie (7) aus Polyvinylidenfluorid als Feststoffempfänger vorgesehen ist, die von der Küvette (4, 5) aus gesehen hinter der ersten Folie angeordnet ist.

5. Fotometer zur Gas- oder Flüssigkeitsanalyse mit einer Lichtquelle (1) und einer Lichtmodulationseinrichtung (3, 16), mit einer das zu analysierende Medium enthaltenden Meßstrecke (8, 20), mit einem Empfänger (14), der mit einem Gas gefüllt ist, welches im Absorptionsbereich der zu bestimmenden Komponente absorbiert und der eine Einrichtung zur Umandlung der auftreffenden Strahlung in ein elektrisches Ausgangssignal aufweist sowie mit einer Auswerteeinheit, dadurch gekennzeichnet, daß die Einrichtung zur Umwandlung der auftreffenden Strahlung in ein elektrisches Ausgangssignal aus einer Folie (6) aus Polyvinylidenfluorid besteht, die derart an die Auswerteeinheit angeschlossen ist, daß deren pyroelektrischer Effekt ein Referenzsignal und deren piezoelektrischer Effekt ein von der Konzentration der zu bestimmenden Komponente abhängiges Meßsignal erzeugt und daß eine Selektivierungsküvette (13) im Strahlengang vor dem Empfänger (14) vorgesehen ist, die zur Bestimmung des Referenzsignales in den Strahlengang einbringbar ist und die mit dem gleichen Gas wie der Empfänger (14) gefüllt ist.

6. Fotometer nach Anspruch 5, dadurch gekennzeichnet, daß die Meßstrecke eine das zu analysierende Medium enthaltende Absorptionsküvette (8) ist.

7. Fotometer nach Anspruch 5, dadurch gekennzeichnet, daß die Meßstrecke für eine in-situ-Messung sich in dem Raum (20) zwischen der Lichtquelle (1) und dem Empfänger (14) befindet.

8. Fotometer nach Anspruch 1 oder Anspruch 5, dadurch gekennzeichnet, daß auf die Folie (6) beidseitig eine transparente Schicht aus elektrisch leitendem Material aufgebracht ist.

**Revendications**

1. Photomètre pour l'analyse de gaz ou de liquide, avec une source de lumière (1) et un dispositif de modulation de lumière (2, 3), avec une cuvette de mesure (5) et une cuvette de comparaison (4) sur le trajet des rayons de cette source de lumière, ainsi qu'avec un détecteur sur le trajet des rayons, immédiatement après les cuvettes de mesure et de comparaison, avec au moins un récepteur en matière solide pour convertir le rayonnement incident en un signal de sortie électrique, photomètre caractérisé en ce que, comme récepteur en matière solide, il est prévu un film (6) en fluorure de polyvinylidène, dont la surface recevant le rayonnement lumineux est aussi grande que la surface de section transversale des cuvettes.

2. Photomètre selon la revendication 1, caractérisé en ce que le film (6) est noirci pour augmenter l'effet thermique.

3. Photomètre selon la revendication 1 ou 2, caractérisé en ce que le film (6) a une épaisseur de 6 à 10 µm.

4. Photomètre selon la revendication 1, caractérisé en ce que, parallèlement au film (6) il est prévu un second film (7) en fluorure de polyvinylidène, qui, vu à partir des cuvettes (4, 5) est disposé derrière le premier film.

5. Photomètre pour l'analyse de gaz ou de liquide, avec une source de lumière (1) et un dispositif de modulation de lumière (3, 16), avec une section de mesure (8, 20) contenant le fluide à analyser, avec un récepteur (14), qui est rempli avec un gaz qui absorbe, dans la zone d'absorption des composantes à déterminer, et qui comporte un dispositif pour convertir le rayonnement incident en un signal électrique de sortie, ainsi qu'avec une unité d'exploitation, photomètre caractérisé en ce que le dispositif pour convertir le rayonnement incident en un signal électrique de sortie, est constitué par un film (6) de fluorure de polyvinylidène qui est raccordé à l'unité d'exploitation de sorte que son effet pyroélectrique produit un signal de référence et que son effet piézoélectrique produit un signal de mesure dépendant de la concentration des composantes à déterminer, cependant qu'une cuvette de sélection (13) est prévue en avant du récepteur (14) sur le trajet des rayons, cette cuvette étant susceptible d'être introduite dans le trajet des rayons pour la détermination du signal de référence et étant remplie avec le même gaz que le récepteur (14).

6. Photomètre selon la revendication 5, caractérisé en ce que la section de mesure est une cuvette d'absorption contenant le fluide à analyser.

7. Photomètre selon la revendication 5, caractérisé en ce que la section de mesure pour une mesure in-situ, se trouve dans l'espace (20) entre la source de lumière (1) et le récepteur (14).

8. Photomètre selon la revendication 1 ou la revendication 5, caractérisé en ce que sur les deux faces du film (6) est déposée une couche transparente en un matériau électriquement conducteur.

## Claims

1. A photometer for gas or liquid analysis, having a light source (1) and a light modulation device (2, 3), having a measuring cell (5) and a reference cell (4) in the path of rays of this light source, and having a detector in the path of rays immediately after the measuring and reference cells, with at least one solid receiver to convert the incident radiation into an electrical output signal, characterised in that a sheet (6) of polyvinylidene fluoride of which the area acted upon by the luminous radiation is as large as the cross-sectional area of the cells, is provided as a solid receiver.

2. A photometer according to Claim 1, characterised in that the sheet (6) is blackened in order to increase the thermal effect.

3. A photometer according to Claim 1 or 2, characterised in that the sheet (6) has a thickness from 6 to 10 μm.

4. A photometer according to Claim 1, characterised in that a second sheet (7) of polyvinylidene fluoride is provided parallel to the sheet (6) as a solid receiver which is disposed behind the first sheet seen from the cells (4, 5).

5. A photometer for gas or liquid analysis having a light source (1) and a light modulation device (3, 16), having a measuring section (8, 20) containing the medium to be analyzed, having a receiver (14) which is filled with a gas which absorbs in the absorption range of the components to be determined, which receiver comprises a device for converting the incident radiation into an electrical output signal, and having an evaluation unit, characterised in that the device for converting the incident radiation into an electrical output signal consists of a sheet (6) of polyvinylidene fluoride which is connected to the evaluation unit in such a manner that its pyroelectric effect generates a reference signal and its piezoelectric effect generates a measuring signal dependent on the concentration of the component to be determined, and that a selectivity cell (13) is provided in the path of rays in front of the receiver (14), which selectivity cell can be introduced into the path of rays to determine the reference signal and is filled with the same gas as the receiver (14).

6. A photometer according to Claim 5, characterised in that the measuring is an absorption cell (8) containing the medium to be analyzed.

7. A photometer according to Claim 5, characterised in that, for an in-situ measurement, the measuring section is in the space (20) between the light source (1) and the receiver (14).

8. A photometer according to Claim 1 or Claim 5, characterised in that a transparent layer of an electrically conducting material is applied to the sheet (6) on both sides.

EP 0 168 611 B1

Fig. 1

Fig. 2

1

Fig. 3

Fig. 4

Fig. 5